# EUROPEAN PATENT APPLICATION

(11) **EP 4 293 068 A1**
(43) Date of publication of application: **20.12.2023**
(21) Application number: 21925925.6
(22) Date of filing: 15.12.2021
(51) Int. Cl.: C08J 5/18, C09J 125/08, C08L 25/08, C08F 212/08, C08F 6/18, B32B 5/18, B32B 7/12, F24F 5/00, F24D 11/02, F25B 30/00

(54) **THERMAL BONDING FILM, METHOD FOR PRODUCING SAME, AND WATER TANK ADHESION STRUCTURE USING SAME FOR AIR-TO-WATER SOURCE HEAT PUMP**

(30) Priority: 09.02.2021 KR 20210018505
(71) Applicant: LG Electronics Inc., Yeongdeungpo-gu Seoul 07336 (KR)
(72) Inventor: HONG, Sanghyun, Seoul 08592 (KR)
(74) Representative: Vossius & Partner Patentanwälte Rechtsanwälte mbB
(86) International application number: PCT/KR2021/019104
(87) International publication number: WO 2022/173105

(57) **Abstract**

Disclosed is a water tank adhesion structure using thermal bonding film for air-to-water source heat pump, the thermal film, which is activated by the temperature of the hot water and is inserted between a hot water tank and insulation material for tight adhesion therebeween, activating when hot water is supplied, which is when insulation is actually necessary.

## Description

### [Technical field]

The present invention relates to a thermal bonding film, a manufacturing method thereof, and an adhesion structure of a water tank for an air-to-water source heat pump using the same.

### [Background Art]

In general, an air-to-water source heat pump (AWHP) is a device that creates high-temperature hot water in a process of transferring heat at a low temperature to heat at a high temperature using the characteristics of a refrigerant gas.

In such an air-to-water source heat pump, the refrigerant absorbs heat from the outside in an evaporator, evaporates, turns into a low-temperature and low-pressure gas state, is sucked into a compressor, and is compressed in the compressor to deliver the refrigerant in a high-temperature and high-pressure state to a condenser.

At this time, in the condenser, the refrigerant is liquefied while releasing heat, and the high-pressure liquefied refrigerant is depressurized in an expansion valve, becomes a refrigerant in a low-temperature and low-pressure liquefied state and enters the evaporator, and while this cycle is repeated, low-temperature heat is recovered, and compressor power is added to produce necessary high-temperature heat.

Such an air-to-water source heat pump can transfer thermal energy from a low-temperature part to a high-temperature part and convert it into heat in a desired temperature range with high efficiency as energy efficiency using a compressor that uses minimal electrical energy like a pump for fluid movement. In particular, the air-to-water source heat pumps use heat absorbed from the air as a heat source, and occupy most of the heat pumps for air conditioning.

The air-to-water source heat pump described above has a water tank to store hot water of about 45 to 65 °C, and the outside of the water tank is wrapped with an insulation material to maintain the temperature of the hot water.

Conventionally, a polyurethane insulation material has been used as an insulation material of a water tank, but the polyurethane insulation materials cause environmental pollution, so that the polyurethane insulation materials are being replaced with expandable polystyrene (EPS) injection-molded products.

However, heat loss occurs when the interfacial adhesion between the expandable polystyrene injection-molded product manufactured by injection molding in a mold and the water tank is not perfectly achieved. Although adhesives are used to minimize such heat loss, there has been a problem that general one-time adhesives do not adhere again when broken.

### [Related Art Document]

### [Patent Document]

(Patent Document 1) Korean Laid-Open Patent Publication No. 10-2018-0009523 (published on January 29, 2018)

### [Disclosure]

### [Technical Problem]

The present invention is directed to providing a thermal bonding film that operates at the temperature of hot water filled inside a hot water tank, a manufacturing method thereof, and an adhesion structure of a water tank for an air-to-water source heat pump using the same.

In addition, the present invention is directed to providing a thermal bonding film capable of increasing insulation efficiency by blocking a gap between an insulation material and a hot water tank when hot water is inside the hot water tank by adjusting the operating temperature of the thermal bonding film according to the temperature of the hot water filled inside a hot water tank, a manufacturing method thereof, and an adhesion structure of a water tank for an air-to-water source heat pump using the same.

In addition, the present invention is directed to providing a thermal bonding film that may show the advantage of repeatedly closing a gap by re-adhering a broken adhesive portion when hot water is supplied to the inside of a hot water tank even when the adhesion between an insulation material and the hot water tank is broken by an external impact, a manufacturing method thereof, and an adhesion structure of a water tank for an air-to-water source heat pump using the same.

The objects of the present invention are not limited to the above-mentioned objects, and other objects and advantages of the present invention not mentioned above can be understood by the following description and will be more clearly understood by the examples of the present invention. It will also be readily apparent that the objects and advantages of the present invention may be realized by the means and combinations thereof set forth in the claims.

### [Technical Solution]

According to a thermal bonding film according to the present invention and a manufacturing method thereof, the film is a thermal bonding film that operates at the temperature of hot water to ensure tight adhesion between a hot water tank and an insulation material, and has a feature of operating when the hot water that actually requires insulation is supplied.

In addition, according to the thermal bonding film according to the present invention and the manufacturing method thereof, since the film is closely adhered again by having fluidity at an operating temperature even after adhesion is broken, it may be used semi-permanently.

The thermal bonding film is inserted and disposed in a form of a film between the hot water tank and the insulation material, more specifically, at least one of between an inner panel and the insulation material and between an outer panel and the insulation material, and is characterized in that the process is simple and does not require drying.

For this purpose, a thermal bonding film according to the present invention includes 70 to 95% by weight of a copolymer in which at least two types of polymeric monomers are mixed, 1 to 5% by weight of a dispersant, 0.1 to 3% by weight of a coagulant, and 0.1 to 3% by weight of an initiator.

In addition, an adhesion structure of a water tank for an air-to-water source heat pump using a thermal bonding film according to the present invention may increase insulation efficiency by blocking a gap between the insulation material and the hot water tank when the hot water is inside the hot water tank by adjusting the operating temperature of the thermal bonding film according to the temperature of hot water filled inside the hot water tank.

As a result, the adhesion structure of a water tank for an air-to-water source heat pump using a thermal bonding film according to the present invention may show the advantage of repeatedly closing the gap by re-adhering a broken adhesive portion when hot water is supplied to the inside of the hot water tank even when the adhesion between the insulation material and the hot water tank is broken by an external impact.

In addition, the adhesion structure of the water tank for an air heat source type heat pump using a thermal bonding film according to the present invention has a feature of operating when hot water that requires actual insulation is supplied by inserting a thermal bonding film that operates at the temperature of hot water so that the hot water tank and the insulation material may have close adhesion.

### [Advantageous Effects]

According to the present invention, an adhesion structure according to the present invention can increase insulation efficiency by blocking a gap between an insulation material and a hot water tank when hot water is inside the hot water tank by adjusting the operating temperature of the thermal bonding film according to the temperature of the hot water filled inside the hot water tank.

In addition, the present invention can show the advantage of repeatedly closing the gap by re-adhering a broken adhesive portion when hot water is supplied to the inside of the hot water tank even when the adhesion between the insulation material and the hot water tank is broken by an external impact.

In addition, the adhesion structure according to the present invention has a feature of operating when hot water that actually requires insulation is supplied by inserting a thermal bonding film that operates at the temperature of hot water so that the hot water tank and the insulation material can have close adhesion.

Accordingly, the present invention has an advantage in that even after the adhesion between the hot water tank and the insulation material is broken, re-adhesion can be made by the thermal bonding film having fluidity at an operating temperature, so that the film can be used semi-permanently because it is closely adhered again.

In addition to the above-described effects, the specific effects of the present invention will be described together while describing specific details for carrying out the invention below.

### [Brief Description of Drawings]

FIG. 1 is an exploded perspective view showing an adhesion structure of a water tank for an air-to-water source heat pump using a thermal bonding film according to an embodiment of the present invention.
FIG. 2 is a schematic diagram for describing an adhesion structure of a water tank for an air-to-water source heat pump using a thermal bonding film according to an embodiment of the present invention.
FIG. 3 is an enlarged view of portion A of FIG. 2, and is a cross-sectional view showing a state in which a thermal bonding film is not attached.
FIG. 4 is an enlarged view of portion A of FIG. 2 and is a cross-sectional view showing a state in which a thermal bonding film is attached.
FIG. 5 is a process flow chart showing a method of manufacturing a thermal bonding film according to an embodiment of the present invention.

### [Best Mode for Implementation of the Invention]

The above objects, features, and advantages will be described in detail below with reference to the attached drawings, and accordingly, those skilled in the art will be able to easily implement the technical spirit of the present invention. In the description of the present invention, when it is determined that a specific description of a known function or configuration may unnecessarily obscure the gist of the present invention, the detailed description thereof will be omitted. Hereinafter, embodiments of the present invention will be described in detail with reference to the accompanying drawings. In the drawings, the same reference numerals are used to indicate the same or similar components.

In this specification, the singular expression includes the plural expression unless the context clearly dictates otherwise. In this application, the terms such as "consist of" or "include" should not be construed as necessarily including all of the various elements or steps described in the specification, and it should be construed that some components or steps among them may not be included, or additional components or steps may be further included.

Hereinafter, a thermal bonding film according to some embodiments of the present invention, a manufacturing method thereof, and an adhesion structure of a water tank for an air-to-water source heat pump using the same will be described.

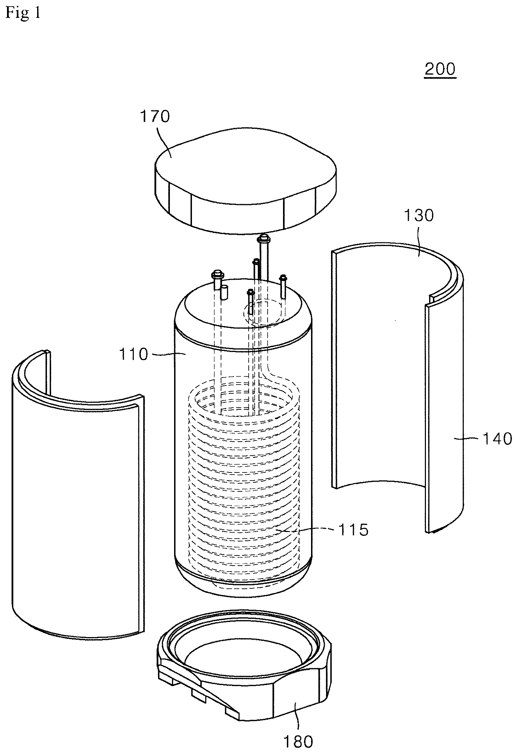

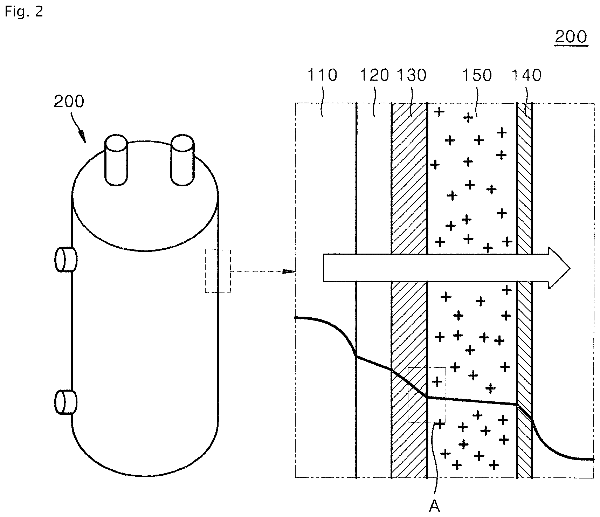

FIG. 1 is an exploded perspective view showing an adhesion structure of a water tank for an air-to-water source heat pump using a thermal bonding film according to an embodiment of the present invention, and FIG. 2 is a schematic diagram for describing an adhesion structure of a water tank for an air-to-water source heat pump using a thermal bonding film according to an embodiment of the present invention.

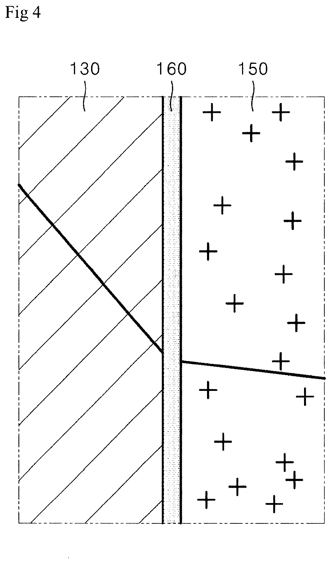

Referring to FIGS. 1 and 2, an adhesion structure 200 of a water tank for an air-to-water source heat pump using a thermal bonding film according to an embodiment of the present invention includes a thermal bonding film (160 in FIG. 4) operating at the temperature of the hot water filled inside a hot water tank 110.

At this time, the adhesion structure 200 of a water tank for an air-to-water source heat pump using a thermal bonding film according to an embodiment of the present invention may increase insulation efficiency by blocking a gap between an insulation material 150 and the hot water tank 110 when the hot water is inside the hot water tank 110 by adjusting the operating temperature of the thermal bonding film according to the temperature of hot water filled inside the hot water tank 110.

As a result, the adhesion structure 200 of a water tank for an air-to-water source heat pump using a thermal bonding film according to an embodiment of the present invention may show the advantage of repeatedly closing the gap by re-adhering a broken adhesive portion when hot water is supplied to the inside of the hot water tank 110 even when the adhesion between the insulation material 150 and the hot water tank 110 is broken by an external impact.

For this purpose, an adhesion structure 200 of a water tank for an air-to-water source heat pump using a thermal bonding film according to an embodiment of the present invention includes a hot water tank 110, an enamel coating layer 120, an inner panel 130, an outer panel 140, an insulation material 150, and a thermal bonding film 160.

The hot water tank 110 is coupled to the air-to-water source heat pump and serves to store hot water circulating through the air-to-water source heat pump. A hot water pipe 115 in the form of a coil may be inserted and disposed inside the hot water tank 110 for connection with the air-to-water source heat pump. Here, an operating temperature of the hot water tank 110 may be 45 to 65 °C.

The enamel coating layer 120 is coated on the outside of the hot water tank 110. At this time, the enamel coating layer 120 is coated on the entire outer surface of the hot water tank 110 to prevent the surface of the hot water tank 110 from being contaminated. The enamel coating layer 120 may use an enamel composition including at least two selected from P₂O₅, SiO₂, Al₂O₃, ZrO₂, Na₂O, Li₂O, B₂O₃, TiO₂, or the like, but this is an example and it will be obvious that various enamel compositions can be applied.

The inner panel 130 is disposed outside the enamel coating layer 120. The inner panel 130 is mounted to ensure the durability of the hot water tank 110, and may be made of a metal material having excellent strength and rigidity.

The outer panel 140 is disposed outside the inner panel 130. Like the inner panel 130, the outer panel 140 is mounted to secure the durability of the hot water tank 110, and may be made of a metal material having excellent strength and rigidity. For example, each of the inner and outer panels 130 and 140 may be made of a stainless steel material.

The insulation material 150 is disposed between the inner panel 130 and the outer panel 140. The insulation material 150 may be made of an expandable polystyrene (ESP) injection-molded product.

The hot water tank 110, the enamel coating layer 120, the inner and outer panels 130 and 140, and the insulation material 150 having the above configuration are assembled and combined by an upper cover 170 and a lower cover 180.

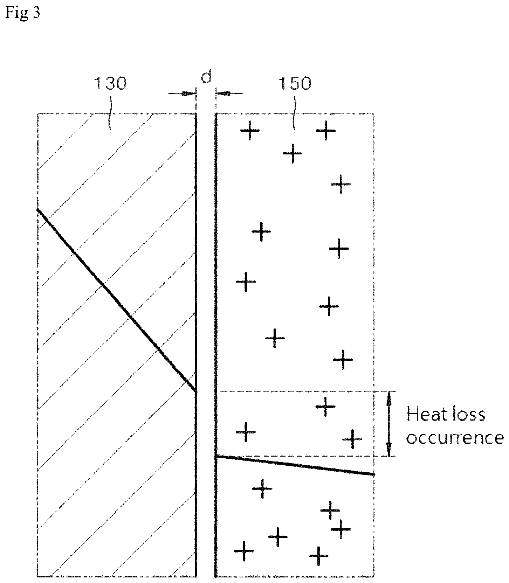

Meanwhile, FIG. 3 is an enlarged view of portion A of FIG. 2 and is a cross-sectional view showing a state in which a thermal bonding film is not attached, FIG. 4 is an enlarged view of portion A of FIG. 2 and is a cross-sectional view showing a state in which a thermal bonding film is attached, and these drawings will be described in conjunction with FIG. 2.

First, as shown in FIGS. 2 and 3, when assembling using an EPS injection-molded product as the insulation material 150 of the hot water tank 110, high adhesion between the inner panel 130 and the outer panel 140 and the insulation material 150 is required, but when the thermal bonding film 160 is not attached between the inner panel 130 and the outer panel 140 and the insulation material 150, adhesion is poor. Such low adhesion causes gaps at regular intervals (d), and heat loss occurs at interfaces that are not in contact due to gaps.

On the other hand, as shown in FIGS. 2 and 4, in the present invention, in order to secure high adhesion between the hot water tank 110 and the insulation material 150 made of EPS injection-molded product, the thermal bonding film 160 is inserted into at least one of between the inner panel 130 and the insulation material 150 and between the outer panel 140 and the insulation material 150.

As described above, in the present invention, in order to prevent heat loss in advance, the thermal bonding film 160 is inserted into at least one of between the inner panel 130 and the insulation material 150 and between the outer panel 140 and the insulation material 150.

An operating temperature of the thermal bonding film 160 is adjusted according to the temperature of hot water filled in the hot water tank 110. Accordingly, when the hot water is inside the hot water tank 110, the gap between the insulation material 150 and the hot water tank 110 is blocked to increase insulation efficiency.

Therefore, in the present invention, since it may be possible to secure high airtightness and adhesion between the hot water tank 110 and the insulation material 150 by introducing the thermal bonding film 160, heat loss due to gaps can be minimized.

That is, the thermal bonding film 160 according to the present invention is an adhesive film that operates at the temperature of hot water to ensure the tight adhesion between the hot water tank 110 and the insulation material 150, and has a feature of operating when hot water that actually requires insulation is supplied. In addition, since the thermal bonding film 160 according to the present invention has fluidity at an operating temperature even after adhesion is broken, the film may be used semi-permanently because it is closely adhered again.

This thermal bonding film 160 is inserted and disposed in the form of a film between the hot water tank 110 and the insulation material 150, more specifically, at least one of between the inner panel 130 and the insulation material 150 and between the outer panel 140 and the insulation material 150, and is characterized in that the process is simple and does not require drying.

In particular, the thermal bonding film 160 operates by heat and is prepared by copolymerizing at least two types of polymeric monomers to adjust the glass transition temperature to prepare a copolymer, removing water through an agglomeration process to prepare a thermal bonding powder, and then thermally compressing the thermal bonding powder to form a film.

For this purpose, the thermal bonding film 160 includes 70 to 95% by weight of a copolymer in which at least two types of polymeric monomers are mixed, 1 to 5% by weight of a dispersant, 0.1 to 3% by weight of a coagulant, and 0.1 to 3% by weight of an initiator.

Here, the copolymer preferably has a glass transition temperature of 45 to 65 °C, and more preferably has a glass transition temperature of 50 to 60 °C. As described above, in the present invention, the copolymer of the thermal bonding film 160 is controlled to have a glass transition temperature of 45 to 65 °C, which is substantially the same as the temperature of the hot water filled in the hot water tank 110. Accordingly, when the hot water flows into the hot water tank 110, the thermal bonding film 160 completely blocks the space between the insulation material 150 and the hot water tank 110 without gaps, thereby increasing insulation efficiency.

Here, the copolymer includes one or more of polystyrene-alkyl acrylate, polystyrene-1,3-diene, polystyrene-alkyl methacrylate, polyacrylic acid, polystyrene-alkyl methacrylate-acrylic acid, polyalkyl methacrylate-acrylic acid, polystyrene-alkylacrylate-acrylonitrile-acrylic acid, polystyrene-1,3-diene-acrylonitrile-acrylic acid, polyalkylacrylate-acrylonitrile-acrylic acid, polystyrene-butadiene, polymethylstyrene-butadiene, polymethyl methacrylate-butadiene, polyethyl methacrylate-butadiene, polypropylmethacrylate-butadiene, polybutyl methacrylate-butadiene, polymethylacrylate-butadiene, polyethylacrylate-butadiene, polypropylacrylate-butadiene, polybutylacrylate-butadiene, polystyrene-isoprene, polymethyl-styrene-isoprene, polymethyl methacrylate-isoprene, polyethyl methacrylate-isoprene, polypropyl methacrylate-isoprene, polybutyl methacrylate-isoprene, polymethyl acrylate-isoprene, polyethyl acrylate-isoprene, polypropylacrylate-isoprene, polybutylacrylate-isoprene, polystyrene-propylacrylate, polystyrene-butylacrylate, polystyrene-butadiene-acrylic acid, polystyrene-butadiene-methacrylic acid, polystyrene-butadiene-acrylonitrile-acrylic acid, polystyrene-butylacrylate-acrylic acid, polystyrene-butylacrylate-methacrylic acid, polystyrenebutylacrylate-acrylonitrile, and polystyrene-butylacrylate acrylonitrile-acrylic acid.

For example, a copolymer in which at least two types of polymeric monomers are mixed is a mixture of a first polymeric monomer having a glass transition temperature of 80 to 120 °C and a second polymeric monomer having a glass transition temperature of -60 to - 30 °C.

The dispersant is added to improve the dispersibility of at least two types of polymeric monomers. As such a dispersant, one or more selected from sodium dodecyl sulfate (SDS) and the BYK series may be used, but this is an example and any one capable of improving the dispersibility of at least two types of polymeric monomers may be used without limitation.

When the addition amount of the dispersant is less than 1% by weight of the total weight of the thermal bonding film, it is difficult to properly exhibit the effect of improving the dispersibility between at least two types of polymeric monomers. Conversely, when the addition amount of the dispersant exceeds 5% by weight of the total weight of the thermal bonding film, fluidity is excessively increased and high-temperature adhesive strength may be lowered, which is not preferable.

The coagulant is added to control a surface charge of the surface of the polymer particle of the copolymer and to enhance the cohesive force, resulting in growth into a particulate form. As the coagulant, one or more selected from polyaluminum chloride (PAC), silicon dioxide, Aerosil, bentonite nanoparticles, silica nanoparticles, silicate, and asbestos may be used.

When the addition amount of the coagulant is less than 0.1% by weight of the total weight of the thermal bonding film, it is difficult to properly exert the effect of enhancing the cohesive force, and thus it may be difficult to achieve growth into a particulate form. Conversely, when the addition amount of the coagulant exceeds 3% by weight of the total weight of the thermal bonding film, it is not economical because it acts as a factor that only increases manufacturing costs without any further effect.

The initiator is added to polymerize polymeric monomers into a copolymer. As such an initiator, one or more selected from azo-based compounds, peroxide-based compounds, and redox-based compounds may be used. More specifically, as the initiator, one or more selected from potassium persulfate (KPS), ammonium persulfate, potassium perlactate, diacyl peroxide, peroxy dicarbonate, peroxy ester, tetramethylbutylperoxy neodecanoate, diethoxyethyl peroxy dicarbonate, diethoxyhexyl peroxy dicarbonate, 2,2-azobis(2-methylbutyronitrile), 2,2-trilazobis(isobutyronitrile), 2,2-trilazobis(2,4-dimethylvaleronitrile), lauryl peroxide, dilauroyl peroxide, and didecanoyl peroxide may be used.

When the addition amount of the initiator is less than 0.1% by weight of the total weight of the thermal bonding film, the addition amount is insignificant and there is a risk that polymerization of the polymeric monomers into the copolymer may not be initiated. Conversely, when the addition amount of the initiator exceeds 3% by weight of the total weight of the thermal bonding film, it is undesirable because high-temperature adhesive strength may be lowered due to the generation of air bubbles due to the addition of a large amount of the initiator.

Hereinafter, a method of manufacturing a thermal bonding film according to an embodiment of the present invention will be described with reference to the accompanying drawings.

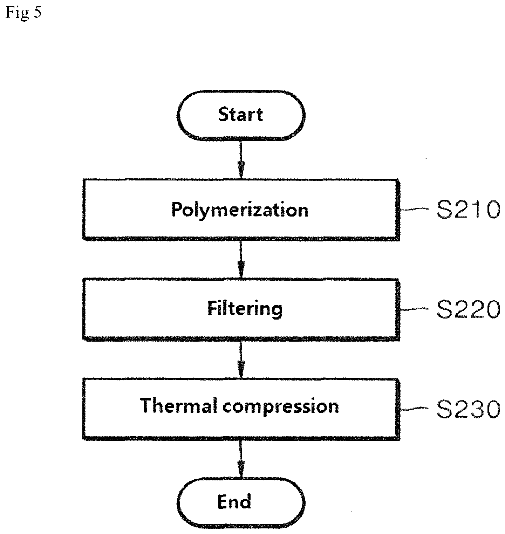

FIG. 5 is a process flow chart showing a method of manufacturing a thermal bonding film according to an embodiment of the present invention.

As shown in FIG. 5, the method of manufacturing a thermal bonding film according to an embodiment of the present invention includes a polymerization step (S210), a filtering step (S220), and a thermal compression step (S230).

### Polymerization

In the polymerization step (S210), at least two types of polymeric monomers are added to a solvent, then a dispersant and an initiator are added, and the monomers are polymerized under a nitrogen atmosphere.

In this step, at least two types of polymeric monomers are copolymerized to form a copolymer. Here, the copolymer preferably has a glass transition temperature of 45 to 65 °C, and more preferably has a glass transition temperature of 50 to 60 °C.

Here, the copolymer includes one or more of polystyrene-alkyl acrylate, polystyrene-1,3-diene, polystyrene-alkyl methacrylate, polyacrylic acid, polystyrene-alkyl methacrylate-acrylic acid, polyalkyl methacrylate-acrylic acid, polystyrene-alkylacrylate-acrylonitrile-acrylic acid, polystyrene-1,3-diene-acrylonitrile-acrylic acid, polyalkylacrylate-acrylonitrile-acrylic acid, polystyrene-butadiene, polymethylstyrene-butadiene, polymethyl methacrylate-butadiene, polyethyl methacrylate-butadiene, polypropylmethacrylate-butadiene, polybutyl methacrylate-butadiene, polymethylacrylate-butadiene, polyethylacrylate-butadiene, polypropylacrylate-butadiene, polybutylacrylate-butadiene, polystyrene-isoprene, polymethyl-styrene-isoprene, polymethyl methacrylate-isoprene, polyethyl methacrylate-isoprene, polypropyl methacrylate-isoprene, polybutyl methacrylate-isoprene, polymethyl acrylate-isoprene, polyethyl acrylate-isoprene, polypropylacrylate-isoprene, polybutylacrylate-isoprene, polystyrene-propylacrylate, polystyrene-butylacrylate, polystyrene-butadiene-acrylic acid, polystyrene-butadiene-methacrylic acid, polystyrene-butadiene-acrylonitrile-acrylic acid, polystyrene-butylacrylate-acrylic acid, polystyrene-butylacrylate-methacrylic acid, polystyrenebutylacrylate-acrylonitrile, and polystyrene-butylacrylate acrylonitrile-acrylic acid.

For example, a copolymer in which at least two types of polymeric monomers are mixed may be a mixture of a first polymeric monomer having a glass transition temperature of 80 to 120 °C and a second polymeric monomer having a glass transition temperature of - 60 to -30 °C.

As the dispersant, one or more selected from sodium dodecyl sulfate (SDS) and the BYK series may be used, but this is an example and any one capable of improving the dispersibility of at least two types of polymeric monomers may be used without limitation. In addition, as an initiator, one or more selected from azo-based compounds, peroxide-based compounds, and redox-based compounds may be used.

In this step, the polymerization may include emulsion polymerization, mini-emulsion polymerization, non-emulsion polymerization, dispersion polymerization, precipitation polymerization, suspension polymerization, and the like, but is not limited thereto.

Such polymerization may be performed at 70 to 90 °C for 30 to 90 minutes. When a polymerization temperature is less than 70 °C or a polymerization time is less than 30 minutes, there is a concern that polymerization of two or more types of polymeric monomers may not be properly performed. Conversely, when the polymerization temperature exceeds 90 °C or the polymerization time exceeds 90 minutes, it is not economical because it may act as a factor that only increases manufacturing costs without further increasing the effect.

### Filtering

In the filtering step (S220), a coagulant is added to the polymerized copolymer and filtered to form a thermal bonding powder.

At this time, the coagulant is added to control a surface charge of the surface of the polymer particle of the copolymer and to enhance the cohesive force, resulting in growth into a particulate form. As the coagulant, one or more selected from polyaluminum chloride (PAC), silicon dioxide, Aerosil, bentonite nanoparticles, silica nanoparticles, silicate, and asbestos may be used.

In this step, the coagulant is added to the polymerized copolymer to control the surface charge of polymer particles and grow them into micrometer-sized particles. In this way, the grown particles are stabilized at around a glass transition temperature of the polymer particles, and then filtered through filter paper to form a thermal bonding powder.

By this filtering process, the thermal bonding powder has an average diameter of 60 µm or less, more specifically, 10 to 60 µm.

### Thermal compression

In the thermal compression step (S230), the thermal bonding powder is thermally compressed and cooled to form a thermal bonding film.

Here, the thermal compression may be performed for 10 to 200 seconds using a hot press maintained at a temperature of 70 to 90 °C.

Thus, the method of manufacturing a thermal bonding film according to the embodiment of the present invention may be completed.

As described above, the thermal bonding film according an embodiment of the present invention, the manufacturing method thereof, and the adhesion structure of a water tank for an air-to-water source heat pump using the same may increase insulation efficiency by blocking a gap between an insulation material and a hot water tank when hot water is inside a hot water tank by adjusting the operating temperature of the thermal bonding film according to the temperature of hot water filled inside the hot water tank.

As a result, the adhesion structure of a water tank for an air-to-water source heat pump using a thermal bonding film according to an embodiment of the present invention may show the advantage of repeatedly closing the gap by re-adhering a broken adhesive portion when hot water is supplied to the inside of the hot water tank even when the adhesion between the insulation material and the hot water tank is broken by an external impact.

In addition, the adhesion structure of the water tank for an air heat source type heat pump using a thermal bonding film according to an embodiment of the present invention has a feature of operating when hot water that requires actual insulation is supplied by inserting a thermal bonding film that operates at the temperature of hot water so that the hot water tank and the insulation material may have close adhesion.

Accordingly, the adhesion structure of a water tank for an air-to-water source heat pump using a thermal bonding film according to the embodiment of the present invention has an advantage in that even after the adhesion between the hot water tank and the insulation material is broken, re-adhesion may be made by the thermal bonding film having fluidity at an operating temperature, so that the film can be used semi-permanently because it is closely adhered again.

### Examples

Hereinafter, the configuration and actions of the present invention will now be described in more detail by way of preferred embodiments of the invention. However, these embodiments are given as preferred examples of the present invention and cannot be construed as limiting the invention in any sense.

The content not described here will be omitted because it can be technically inferred sufficiently by those skilled in the art.

### 1. Manufacture of thermal bonding film

### Example 1

10% by weight of a mixture in which a styrene monomer having a glass transition temperature of 100 °C and a butyl acrylate monomer having a glass transition temperature of -53 °C were mixed in a weight ratio of 2:1 was mixed with 90% by weight of water, and then, to aid emulsification, sodium dodecyl sulfate (SDS) as a dispersant was added in an amount as much as a critical micelle concentration (CMC) to prepare a copolymer having a glass transition temperature of 50 °C.

Next, in order to initiate polymerization, potassium persulfate (KPS) as a watersoluble initiator was added in an amount of 10% by weight based on 100% by weight of the mixture, followed by polymerization at 80 °C for 60 minutes. At this time, before adding the initiator, nitrogen purging was performed for 30 minutes to remove oxygen inside a reactor for smooth action of the initiator.

Next, 17% by weight of a polyaluminum chloride (PAC) solution as a coagulant was diluted 10-fold and slowly mixed into an emulsion using a syringe pump. After adding the coagulant, the mixture was stabilized by stirring at 55 °C for 2 hours, cooled to room temperature (15 °C), and then passed through filter paper to prepare a thermal bonding powder.

Next, after preheating a hot press to 80 °C, the upper and lower ends of the press were coated with polyimide to easily detach a thermal bonding film. Thereafter, 2 g of the thermal bonding powder was input into the center of the press, thermally compressed for 1 minute in the press, and cooled to manufacture a thermal bonding film having a width of 100 mm, a length of 100 mm, and a thickness of 0.2 mm.

### Example 2

A thermal bonding film was manufactured in the same manner as in Example 1, except that polymerization was performed at 90 °C for 40 minutes.

### Example 3

A thermal bonding film was manufactured in the same manner as in Example 1, except that polymerization was performed at 75 °C for 80 minutes.

### Comparative Example 1

A thermal bonding film was manufactured in the same manner as in Example 1, except that 10% by weight of a mixture in which a styrene monomer having a glass transition temperature of 100 °C and a polymethyl methacrylate monomer having a glass transition temperature of 110 °C were mixed in a weight ratio of 2:1 was mixed with 90% by weight of water, and then, to aid emulsification, sodium dodecyl sulfate (SDS) as a dispersant was added in an amount as much as a critical micelle concentration (CMC) to prepare a copolymer having a glass transition temperature of 105 °C.

### 2. Property evaluation

Table 1 shows the evaluation results of physical properties of the thermal bonding films prepared according to Examples 1 to 3 and Comparative Example 1. At this time, the thermal bonding films prepared according to Examples 1 to 3 and Comparative Example 1 were left at 50 °C and 95% relative humidity for 100 hours, then adhesive strength was measured, and the results are shown in Table 1.

**[Table 1]**

| Classification | Adhesive strength (gf/cm) |
|---|---|
| Example 1 | 1,324 |
| Example 2 | 1,356 |
| Example 3 | 1,319 |
| Comparative Example 1 | 847 |

As shown in Table 1, it was confirmed that the thermal bonding films prepared according to Examples 1 to 3 exhibit superior adhesive strength at 50 °C, which is a hot water operating temperature, compared to the thermal bonding film prepared according to Comparative Example 1.

As described above, it is obvious that although the present invention has been described with reference to the illustrated drawings, the present invention is not limited by the embodiments and drawings disclosed herein, and various modifications may be made by those skilled in the art within the scope of the technical idea of the present invention. In addition, although the operational effects according to the configuration of the present invention have not been explicitly described and described while describing the embodiments of the present invention, it is natural that the effects predictable by the corresponding configuration should also be recognized.

## Claims

1. A thermal bonding film comprising:
70 to 95% by weight of a copolymer in which at least two types of polymeric monomers are mixed;
1 to 5% by weight of a dispersant;
0.1 to 3% by weight of a coagulant; and
0.1 to 3% by weight of an initiator.

2. The thermal bonding film of claim 1, wherein the copolymer has a glass transition temperature of 45 to 65 °C.

3. The thermal bonding film of claim 2, wherein the copolymer includes one or more of polystyrene-alkyl acrylate, polystyrene-1,3-diene, polystyrene-alkyl methacrylate, polyacrylic acid, polystyrene-alkyl methacrylate-acrylic acid, polyalkyl methacrylate-acrylic acid, polystyrene-alkylacrylate-acrylonitrile-acrylic acid, polystyrene-1,3-diene-acrylonitrile-acrylic acid, polyalkylacrylate-acrylonitrile-acrylic acid, polystyrene-butadiene, polymethylstyrene-butadiene, polymethyl methacrylate-butadiene, polyethyl methacrylate-butadiene, polypropylmethacrylate-butadiene, polybutyl methacrylate-butadiene, polymethylacrylate-butadiene, polyethylacrylate-butadiene, polypropylacrylate-butadiene, polybutylacrylate-butadiene, polystyrene-isoprene, polymethyl-styrene-isoprene, polymethyl methacrylate-isoprene, polyethyl methacrylate-isoprene, polypropyl methacrylate-isoprene, polybutyl methacrylate-isoprene, polymethyl acrylate-isoprene, polyethyl acrylate-isoprene, polypropylacrylate-isoprene, polybutylacrylate-isoprene, polystyrene-propylacrylate, polystyrene-butylacrylate, polystyrene-butadiene-acrylic acid, polystyrene-butadiene-methacrylic acid, polystyrene-butadiene-acrylonitrile-acrylic acid, polystyrene-butylacrylate-acrylic acid, polystyrene-butylacrylate-methacrylic acid, polystyrenebutylacrylate-acrylonitrile, and polystyrene-butylacrylate acrylonitrile-acrylic acid.

4. The thermal bonding film of claim 2, wherein the copolymer is a mixture of a first polymeric monomer having a glass transition temperature of 80 to 120 °C and a second polymeric monomer having a glass transition temperature of -60 to -30 °C.

5. The thermal bonding film of claim 1, wherein the coagulant includes one or more selected from polyaluminum chloride (PAC), silicon dioxide, Aerosil, bentonite nanoparticles, silica nanoparticles, silicate, and asbestos.

6. A method of manufacturing a thermal bonding film, comprising:
adding at least two types of polymeric monomers to a solvent, adding a dispersant and an initiator, and polymerizing the monomers under a nitrogen atmosphere;
adding a coagulant to the polymerized copolymer and filtering to form a thermal bonding powder; and
thermally compressing and cooling the thermal bonding powder to form a thermal bonding film.

7. The method of claim 6, wherein the copolymer has a glass transition temperature of 45 to 65 °C.

8. The method of claim 6, wherein the polymeric monomers include a first polymeric monomer having a glass transition temperature of 80 to 120 °C, and a second polymeric monomer having a glass transition temperature of -60 to -30 °C.

9. The method of claim 6, wherein the polymerization is performed at 70 to 90 °C for 30 to 90 minutes.

10. The method of claim 6, wherein the thermal bonding powder has an average diameter of 60 µm or less.

11. An adhesion structure of a water tank for an air-to-water source heat pump using a thermal bonding film, comprising:
a hot water tank coupled to an air-to-water source heat pump to store hot water circulating in the air-to-water source heat pump;
an enamel coating layer coated on the outside of the hot water tank;
an inner panel disposed outside the enamel coating layer;
an outer panel disposed outside the inner panel;
an insulation material disposed between the inner panel and the outer panel; and
a thermal bonding film disposed at at least one of between the inner panel and the insulation material and between the outer panel and the insulation material,
wherein the thermal bonding film includes 70 to 95% by weight of a copolymer in which at least two types of polymeric monomers are mixed, 1 to 5% by weight of a dispersant, 0.1 to 3% by weight of a coagulant, and 0.1 to 3% by weight of an initiator.

12. The adhesion structure of claim 11, wherein the copolymer has a glass transition temperature of 45 to 65 °C.

13. The adhesion structure of claim 11, wherein the polymeric monomers include a first polymeric monomer having a glass transition temperature of 80 to 120 °C, and a second polymeric monomer having a glass transition temperature of -60 to -30 °C.

14. The adhesion structure of claim 11, wherein the hot water tank has an operating temperature of 45 to 65 °C.

15. The adhesion structure of claim 11, wherein the insulation material is made of an expandable polystyrene (ESP) injection-molded product.
